Europäisches Patentamt

European Patent Office

Office européen des brevets

(11) Publication number: **0 255 169**
**A2**

## EUROPEAN PATENT APPLICATION

(21) Application number: 87201353.7

(22) Date of filing: 15.07.87

(51) Int. Cl.³: **H 04 Q 11/04**
**H 04 Q 5/00**

(30) Priority: 31.07.86 GB 8518706

(43) Date of publication of application:
03.02.88 Bulletin 88/5

(84) Designated Contracting States:
AT BE CH DE ES FR GR IT LI LU NL SE

(71) Applicant: THE PLESSEY COMPANY plc
Vicarage Lane
Ilford Essex, IG1 4AQ(GB)

(72) Inventor: Ozdamar, Mahir
42 Cogdeane Road
Canford Heath Poole Dorset BH17 9AS(GB)

(74) Representative: Allen, Derek
The Plessey Company plc Intellectual Property
Department Vicarage Lane
Ilford Essex, IG1 4AQ(GB)

(54) Telecommunication exchange equipment incorporating multiparty lines using integrated service digital network techniques.

(57) The exchange equipment is controlled to correlate a subscriber's directory number with the subscriber's termination equipment identity to provide a plurality of multiparty line configurations. The multiparty lines are provided more easily and cheaply than those at present.

FIG 1

# TELECOMMUNICATION EXCHANGE EQUIPMENT INCORPORATING MULTIPARTY LINES USING INTEGRATED SERVICE DIGITAL NETWORK TECHNIQUES.

The present invention relates to the provision of telecommunication exchange equipment incorporating multiparty lines using integrated service digital network (ISDN) techniques

The invention finds application in telecommunication exchange equipment known as System X

Multiparty lines are widely used in many countries. The multiparty lines can take the form of 1+1 4 party lines. 8 party lines or 10 party lines.

The CCITT definition of ISDN user access defines a Basic interface structure. The Basic interface is defined for single line access via a conventional twisted-pair subscriber's loop. It is composed of two B-channels and one D-channel where the B-channels have a bit rate of 64kbit/s, and the D-channel has a bit rate of 16kbit/s giving an aggregate of 144 kbit/s.

A B-channel can carry voice or non-voice information and may be used to provide access to various communication modes such as circuit switching, packet switching and semi-permanent connections and each of the two B-channels may be used independently.

A D-channel is primarily intended to carry signalling information relating to B-channel circuit-switched calls but may also carry a user's packet-switched data and telemetry or other low rate data

which may be carried by the D-channel protocol. The D-channel uses a frame oriented protocol which provides a powerful and flexible bothway signalling capability to support a wide range of subscriber services.

The current implementation of multiparty lines applies to analogue lines and is difficult and costly. They require special ringers subscriber identification modules etc. With the systems not using FDM techniques only one subscriber can make or receive a call at any one time. A terminating call can cause everyone's telephone to ring at the same time.

An aim of the present invention is to provide multiparty lines easily. cheaply and in a flexible manner.

According to the present invention there is provided telecommunication exchange equipment incorporating multiparty lines using integrated service digital network techniques wherein the exchange equipment is controlled to correlate a subscriber's directory number with the subscriber's termination equipment identity to provide a plurality of multiparty line configurations.

An embodiment of the present invention will now be described with reference to the accompanying drawings wherein:

Figure 1 shows a passive bus interconnecting terminal equipment to a network terminal.

Figure 2 shows a flow diagram for an originating call and.

Figure 3 shows a flow diagram for a terminating call.

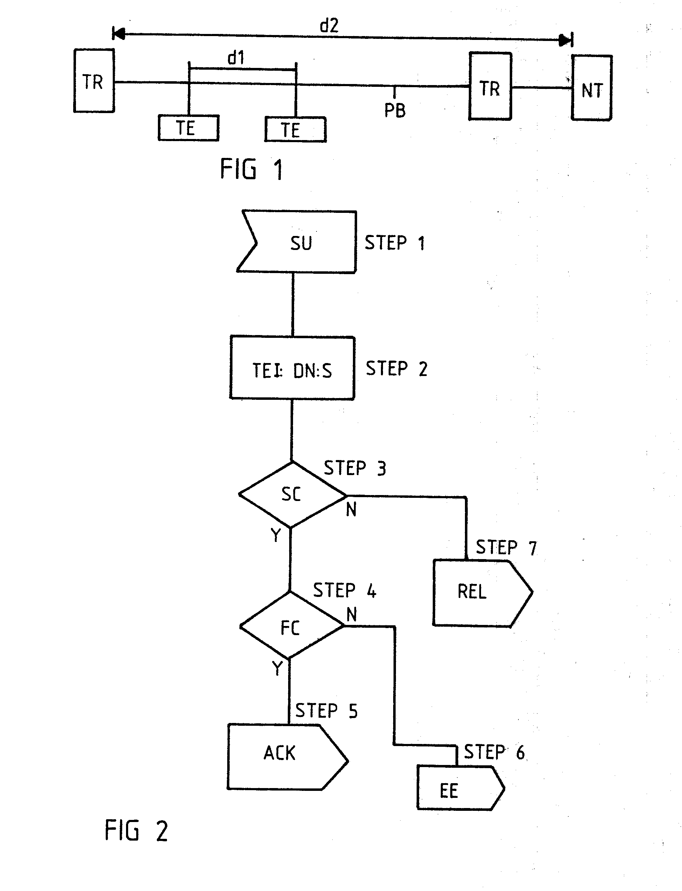

Referring to Figure 1. a passive bus PB is shown interconnecting a network terminal NT to a number of terminal equipments TE. Termination resistors TR are also shown. The network termination NT may be connected directly to the exchange termination equipment in the telecommunication exchange or may be connected by way of other network terminations which are connected to the exchange termination equipment.

The 144kbit/s ISDN subscriber's loop provides 2 64kbit/s B channels and a separate 16kbit/s D channel. Furthermore the bus defined by CCITT is a 4-wire passive bus extending to 150 metres between the network termination NT and the terminal equipment TE. In case of a simple PBX or remote mux type application the subscribers terminals can be distributed over 1km of cable, say for indoor applications. The terminals can be supported in a star configuration. Up to 8 terminals can be connected to the passive bus.

In practice, distance d1 is typically 25-50 metres and distance d2 is 100 to 1000 metres.

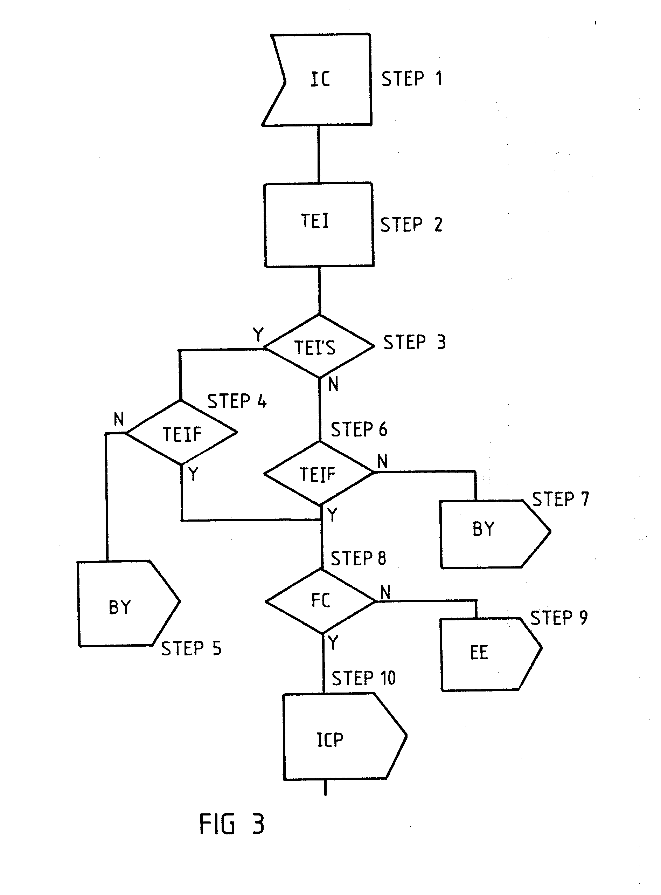

Figures 2 and 3 show the flow diagrams for originating and terminating a telephone call to a multiparty line.

The software depicted in Figures 2 and 3 provides (a) 2 subscriber multiparty line with each subscriber having 1 dedicated B-channel. This provides independent access of each subscriber to B-channel services and also to the D-channel. which may be used for packet switched calls and (b) 2-8 subscriber multiparty lines with each subscriber having access to both B channels. In this case when both B-channels are in use and there is another attempt to seize a channel. equipment engaged message is returned to the subscriber's equipment. An equipment engaged tone is generated locally at the subscriber's equipment. The software in the exchange correlates the call equipment identity/termination equipment identity CEI/TEI of a subscriber's equipment with his directory number DN. The usage of the B-channels are associated with the CEI/TEI parameters. The D-channel is common to all subscribers and can be used for packet access by all subscribers interested in this service. The invention does not require any special exchange hardware for providing multiparty service. Only the subscriber receiving an incoming call will be alerted.

Referring to Figure 2, the flow diagram for an originating call is shown.

STEP 1. SU

This step is initiated by the user and causes set up, SU of a call.

STEP 2. TEI. DN.S.

This step causes a look-up table to be addressed to identify the terminal equipment identity TEI, the directory number, DN; and the services, S available STEP 3. SC

This step determines whether the service is compatable based on the result of step 2.

STEP 4. FC.

This step determines whether a free channel FC is available. If not step 6 is performed. If a channel is available, step 5 is performed.

STEP 5. ACK.

This step is performed if the service is compatible as determined by step 3. and causes an acknowledgement signal ACK to be returned to the user, and call set up proceeds in known manner.

STEP 6. EE.

This step indicates that the equipment is engaged EE. if no free channel is available.

STEP 7. REL.

This step is performed if the service is not compatible as determined by step 3 and the user to be released from the equipment.

Referring to Figure 3, the flow diagram for a terminating call is shown.

STEP 1. IC.

This step identifies an incoming call IC from the network.

STEP 2. TEI.

This step analyses the look-up table to determine the termination equipment identities. TEI.

STEP 3. TEI's.

This step determines if there is more than one termination equipment identity TEI.

STEP 4. TEIF.

This step is performed if more than one termination equipment identity is established by step 3. and checks if the termination equipment identity is free. If it is free, step 8 is performed if it is not free step 5 is performed.

STEP 5. BY.

This step is performed to indicate that the subscriber is busy, BY.

STEP 6. TEIF.

This step is performed if step 3 determines that there is only one termination equipment identity. and determines if it is free. If it is not free step 7 is performed. If it is free, step 8 is performed.

STEP 7. BY.

This step is performed to indicate that the subscriber is busy, BY.

STEP 8. FC.

This step determines whether a free channel FC is available. If not, step 9 is performed. If a channel is available, step 10 is performed.

STEP 9. EE.

This step indicates that the equipment is engaged, EE, if no free channel is available.

STEP 10. ICP.

This step indicates to the user that the incoming call can proceed in usual manner if a free channel is available.

## CLAIMS

1.    A telecommunication exchange equipment incorporating multiparty lines using integrated service digital network techniques, characterised in that the exchange equipment is controlled to correlate a subscribers directory number (DN) with the subscribers termination equipment identity (TEI), to provide a plurality of multiparty line configurations.

2.    A telecommunication exchange equipment as claimed in Claim 1, characterised in that a network terminal (NT) is connected to a number of terminal equipments (TE) by way of a passive bus (PB), said network terminal (NT) being connectable directly to exchange termination means or by way of other network terminals to the exchange termination means.

3.    A telecommunication exchange equipment as claimed in Claim 2, characterised in that the passive bus (PB) is terminated at an end remote from the network terminal, by termination resistance means (TR), and the distance (d2) between the termination resistance means (TR) and the network terminal (NT) is in the range of 100-1000 metres.

4.    A telecommunication exchange equipment as claimed in Claim 3, characterised in that the distance (d1) between terminal equipments (TE) is in the range of 25 to 50 metres.

5. A telecommunication exchange equipment as claimed in Claim 4, characterised in that to originate a call the exchange equipment is arranged to address a look-up table to identify the terminal equipment identity (TEI), the directory number (DN) and the services available the exchange equipment is also arranged to determine if a free communication channel is available and determines the compatability of the service requested and the exchange equipment is further arranged to generate an engaged signal. if a communication channel is not free. and to terminate the call if the service is not compatible.

6. A telecommunication exchange equipment as claimed in Claim 5, characterised in that to terminate and incoming call. the exchange equipment is arranged to identify a incoming call and is arranged to determine if more than one terminal equipment (TE) has been identified and which of them are free. and whether a communication channel is available. the exchange equipment is further arranged to generate an engaged signal if the terminal equipment (TE) is not free. and if a channel is not available in which case the call is terminated.

1/2

FIG 1

FIG 2

FIG 3